# FASCICULE DE BREVET EUROPEEN

(11) **EP 1 579 319 B1**
(45) Date de publication et mention de la délivrance du brevet: **14.08.2013**
(21) Numéro de dépôt: 03799600.6
(22) Date de dépôt: 29.12.2003
(51) Int. Cl.: G06F 9/445, H04N 5/00

(54) **DISPOSITIFS ET PROCÉDÉS DE DÉCISION CONDITIONNELLE D'EXÉCUTION DE SERVICES REÇUS ET DE CONSTITUTION DE MESSAGES D'INFORMATIONS ASSOCIÉS, DES SERVICES, ET PRODUITS ASSOCIÉS**
VORRICHTUNGEN UND VERFAHREN ZUR KONDITIONELLEN ENTSCHEIDUNG ZUM AUSFÜHRUNG VON EMPFANGENEN DIENSTEN UND ZUR ERZEUGUNG VON INFORMATIONSNACHRICHTEN ASSOZIIERT MIT DEN DIENSTEN
DEVICES AND METHODS FOR CONDITIONAL EXECUTION DECISION MAKING IN RELATION TO SERVICES RECEIVED AND CREATION OF INFORMATION MESSAGES ASSOCIATED WITH SAID SERVICES, AND ASSOCIATED PRODUCTS

(30) Priorité: 02.01.2003 FR 0300011
(43) Date de publication de la demande: 28.09.2005
(73) Titulaire: Thomson Licensing, 92130 Issy-les-Moulineaux (FR)
(72) Inventeur: LESENNE, Laurent, F-35690 Acigne (FR); PASQUIER, Frédéric, F-35890 Laillé (FR)
(74) Mandataire: Le Dantec, Claude
(86) Numéro de dépôt international: PCT/EP2003/051107
(87) Numéro de publication internationale: WO 2004/066144

(56) Documents cités:
- EP-A- 0 911 728
- EP-A2- 0 824 236
- WO-A-01/53937
- WO-A-01/98899
- WO-A-99/34286
- WO-A-02/075527
- WO-A1-01/33833
- WO-A1-98/28916
- US-A- 6 052 732
- US-A1- 2002 162 117

## Description

La présente invention se rapporte à des dispositifs et procédés, d'une part de décision conditionnelle d'exécution de services reçus et d'autre part de constitution de messages d'informations associés à des services, ainsi qu'à des produits associés.

Elle s'applique tant à des téléviseurs interactifs qu'à des boîtiers décodeurs ou STBs (pour « set top boxes »), permettant à des utilisateurs d'interagir avec des services interactifs. Ces terminaux sont pour ce faire généralement connectés à un ou deux réseaux de communication comprenant un réseau bidirectionnel (voie de retour modem, câble...) de type point-à-point (comme le réseau téléphonique) et un réseau de distribution mono-directionnel (réseau de diffusion TV hertzien, câble, satellite) analogique ou numérique. On s'intéresse ci-après plus particulièrement à des terminaux grand-public interactifs, qui incluent notamment des récepteurs tels que ceux commercialisés sous la marque TAK (eTV), des décodeurs DVB (pour « Digital Video Broadcasting ») et des décodeurs Internet.

L'exécution dans un tel terminal, de services interactifs en plus des programmes diffusés, repose sur des fonctionnalités spécifiques du terminal, notamment pour l'affichage. Ces spécificités ont le plus souvent la forme d'un ensemble logiciel embarqué, incluant des plugiciels ou « plug-ins », c'est-à-dire des logiciels d'applications complémentaires à des logiciels existants, qui entrent automatiquement en action en présence d'objets multimédias sans que l'utilisateur ait à intervenir. Les plug-ins sont généralement associés à des navigateurs Web. Souvent téléchargés gratuitement sur Internet, ils permettent par exemple d'écouter des sons ou de voir des vidéos. Par exemple, un plug-in très répandu est celui commercialisé sous la dénomination « Flash » par la société Macromedia. Ce plug-in de dynamisation de pages Internet permet d'insérer des animations dans des pages au format HTML (pour « HyperText Markup Language »).

Les fournisseurs de services sont principalement des émetteurs de diffusion générale appelés « broadcasters », ou des annonceurs. Un opérateur de services contrôle quant à lui la diffusion des services interactifs, en vertu d'un contrat signé avec un fournisseur, direct ou indirect (par sous-traitance), de ces services. Ces derniers concernent généralement soit des événements en direct ou des jeux télévisés (le fournisseur est alors un broadcaster), soit des publicités interactives (le fournisseur est alors un annonceur). Dans les deux cas, l'opérateur de services s'engage à la bonne diffusion des services (nombre et planning des diffusions, bonne exécution...) et assure, outre une certaine qualité de service, une réception par un nombre aussi élevé que possible de terminaux.

Ainsi, les terminaux grand-public interactifs reçoivent des programmes enrichis, c'est-à-dire des programmes audiovisuels auxquels sont liés des services interactifs. Chaque service interactif comprend classiquement, pour des émissions selon la norme ATVEF (pour « Advanced Television Enhancement Forum »), des pages HTML et des dépendances telles que des images aux formats GIF (pour « Graphics Interchange Format ») ou JPEG (pour « Joint Photographic Experts Group »), ou des animations Flash. Ce fonctionnement est similaire pour des émissions selon la norme DVB-MHP (pour « Multimedia Home Platform »), cette norme s'appuyant aussi sur HTML.

Typiquement, lorsqu'un programme enrichi est diffusé, le terminal commence par procéder à l'acquisition du service interactif. Puis, la réception d'un signal envoyé par l'opérateur provoque l'apparition d'un affichage graphique ou textuel en surimpression de la vidéo, invitant l'utilisateur à interagir avec ce service. Eventuellement, selon le choix de l'opérateur, cette invitation est évitée et le service apparaît directement. Dans le cadre de l'ATVEF, la diffusion et l'affichage du service interactif comprennent les étapes suivantes :
- diffusion d'un message d'annonce de service (announcement) prévenant le terminal qu'une interactivité est présente ; le terminal se met alors à l'écoute du contenu du service interactif, donc en attente de réception des pages HTML et de toutes les dépendances composant ce service, et des ordres d'exécution de ce service sous forme de déclencheurs ou « triggers » (déclencheurs d'affichage, mais aussi déclencheurs de mise à jour du service) ;
- diffusion du contenu ;
- et diffusion des déclencheurs.

Dans le cadre de MHP, le fonctionnement est similaire, le message d'annonce de service étant constitué par une signalisation.

Or, les plug-ins évoluent très vite et il en existe de nombreuses versions successives. Ainsi, le plug-in Flash comprend actuellement en particulier les versions Flash3, Flash4 et Flash5, toutes très utilisées. Un terminal disposant du plug-in Flash5 peut alors afficher des animations Flash3, mais s'il ne connaît que Flash3, il est incapable d'afficher correctement une page HTML embarquant une animation faite en Flash4 ou Flash5. Qui plus est, les fournisseurs de services ont tendance à toujours vouloir utiliser les dernières versions des plug-ins, afin de profiter au maximum de leurs fonctionnalités et de peaufiner la présentation de leurs services interactifs.

Côté terminaux interactifs, il est donc nécessaire de procéder régulièrement à des mises à jour. Tant que les services sont opérés par une unique entité vers des cibles homogènes, de telles opérations peuvent encore être maîtrisées. Cependant, dès lors que deux opérateurs de services sont opérationnels ou que le parc de STBs ou de TV interactives visé devient hétérogène, des difficultés surgissent. Ainsi, si un terminal n'a pas été remis à jour lors d'une dernière campagne de téléchargement de logiciel, par exemple, ce terminal n'est peut-être plus capable d'afficher certains services interactifs émis. Or, il est probable pour les applications grand-public que le parc de terminaux est effectivement hétérogène, tous les terminaux n'ayant pas été remis systématiquement à jour.

Pour affronter cette difficulté, il est connu de faire en sorte que les services émis indiquent aux terminaux les plug-ins et leurs versions, requis pour une exécution parfaite. Le terminal peut alors décider d'exécuter ou non le service selon les moyens dont il dispose, quitte à afficher une page HTML en mode dégradé s'il dispose d'une version moins performante que celle indiquée, mais malgré tout exploitable pour ce service.

Cette approche contraste avec celle du monde informatique, dans lequel on propose à l'utilisateur de télécharger la version la plus récente du plug-in requis, par exemple pour afficher une page HTML. Ce choix par l'utilisateur n'est alors pas gênant, puisque la demande s'adresse à un public relativement averti et que la durée de téléchargement n'a pas d'impact sur la qualité du service (pas de synchronisation avec une émission). Par analogie avec le monde informatique, si l'utilisateur d'un terminal interactif sollicite le réseau bidirectionnel pour requérir des informations même s'il ne dispose pas de la dernière version de plug-in souhaitée, un affichage en mode dégradé est également acceptable, dans la mesure où c'est l'utilisateur lui-même qui prend l'initiative d'exécuter le service.

En revanche, dans le cas d'un service reçu par diffusion générale (broadcasting), il est important que le service (par exemple une publicité interactive) s'exécute parfaitement sur tous les terminaux grand public qui le reçoivent, conformément au contrat passé au préalable entre l'opérateur et le fournisseur du service. L'affichage en mode dégradé, comme la non-exécution du service, risquent en effet d'être fortement préjudiciables à la qualité des prestations.

La norme MHP, dans sa version la plus récente 1.1.1 (ETSI TS 102 812 V1.1.1) prévoit d'indiquer dans la signalisation, des renseignements relatifs aux plug-ins requis pour l'exécution des services associés (§ 10.13.2), tels que l'identité de l'application de plug-in et son mode de démarrage. De plus (§ 10.13.3), il est prévu de pouvoir associer chaque application exécutable au moyen d'un plug-in, à plusieurs plug-ins pouvant chacun convenir à cet effet, classés par ordre de préférence (dont un par défaut). La norme reste cependant silencieuse sur l'utilisation de ces informations lorsque aucun des plug-ins exploitables pour une application à exécuter n'est disponible localement dans le terminal. Vraisemblablement, les usages en cours dans ce domaine conduisent alors à refuser l'exécution du service.

Afin de résoudre partiellement les difficultés posées par la non exécution de services, ou leur exécution approximative, on pourrait envisager un téléchargement systématique des plug-ins préférés requis dans une signalisation MHP, dès lors que ceux-ci ne sont pas disponibles localement. Une telle solution permettrait au moins d'anticiper sur des besoins ultérieurs relatifs à ces plug-ins.

Cependant, le problème d'exécution des services reposant sur un plug-in non encore disponible resterait pénalisant. En effet, il est vraisemblable que dans un grand nombre de cas, le téléchargement ne serait pas achevé au moment de la réception des contenus et triggers. Non seulement le service reçu risquerait alors de ne pas pouvoir être exécuté, mais le terminal acquerrait souvent inutilement le contenu de ce service. Qui plus est, une opération automatique de téléchargement de plug-ins risquerait d'être problématique à bien des égards, notamment en termes d'encombrement de bande passante et d'espace de stockage.

C'est pourquoi la solution la plus naturelle paraît consister à procéder à une exécution conditionnelle de l'application considérée, selon que les plug-ins requis (mentionnés dans la signalisation) sont ou non disponibles localement, quitte à tenir compte des plug-ins manquants pour mettre au point une gestion de mise à jour locale faisant intervenir un utilisateur. Un tel processus de mise à jour en fonction des sollicitations vis-à-vis d'un terminal ne vaudrait de toute manière que pour l'avenir, et ne serait donc pas applicable aux services requérant pour la première fois une nouvelle version d'un plug-in, ou un plug-in dont le besoin ne s'était pas fait sentir jusqu'alors.

La présente invention propose un dispositif de décision conditionnelle d'exécution de services reçus, qui permet de surmonter en grande partie les difficultés ci-dessus, en rendant possible une réduction significative du nombre de cas où les services ne peuvent pas être exécutés, tout en évitant des opérations de téléchargement préjudiciables à l'utilisation des terminaux concernés ainsi qu'une gestion complexe et fastidieuse pour les utilisateurs. De plus, le dispositif de décision conditionnelle de l'invention peut faciliter une mise à jour souple et efficace des fonctionnalités disponibles dans les terminaux.

L'invention concerne aussi un procédé de décision conditionnelle d'exécution correspondant au dispositif de décision de l'invention, ainsi qu'un dispositif et un procédé de constitution de messages d'informations et des produits associés.

Elle s'applique en particulier au domaine de la télévision, mais trouve aussi des applications intéressantes dans la radio, ainsi que dans tout autre secteur pouvant mettre en oeuvre la diffusion de services ayant des durées de vie prédéterminées. Elle est de plus exploitable aussi bien dans le monde analogique que dans celui numérique.

Par « service », on entend ci-après un ensemble de fonctionnalités prévu pour être transmis à des terminaux et pour s'y exécuter, parallèlement à la réception par ces terminaux de programmes diffusés par diffusion générale (« broadcasting »). Ce service peut être ou non interactif, l'interactivité pouvant elle-même être locale (communication entre un utilisateur et son terminal) ou à distance via une voie de retour (communication entre un utilisateur et un opérateur de service via le terminal).

L'invention a ainsi pour objet un dispositif de décision conditionnelle d'exécution de services reçus via un réseau de communications, ces services reçus ayant des durées de vie prédéterminées. Le dispositif comprend :
- un module de réception d'informations associées aux services, prévu pour recevoir ces informations préalablement à des exécutions des services associés,
- un module d'identification parmi les informations reçues, de renseignements relatifs à des programmes informatiques requis pour l'exécution des services associés à ces informations,
- un module de contrôle de disponibilité locale des programmes informatiques identifiés,
- et un module de décision sélective d'exécution de services, prévu pour autoriser l'exécution des services si les programmes informatiques requis pour ces services sont disponibles localement.

Selon l'invention, ce dispositif comprend aussi :
- un module d'obtention de programmes informatiques, capable de déclencher un téléchargement des programmes informatiques requis pour les services si ces programmes informatiques ne sont pas disponibles localement,
- et un module de décision sélective automatique d'obtention de programmes informatiques, capable d'autoriser et d'interdire le téléchargement des programmes informatiques requis pour ces services et non disponibles localement, au moins en fonction des informations associées à ces services.

Ainsi, de façon surprenante, l'invention ne repose ni sur une adaptation au niveau de l'émission, par exemple pour proposer systématiquement les plug-ins les plus récents suffisamment tôt avant la diffusion de services y ayant recours, ni sur une adaptation au niveau de la réception, par exemple en augmentant les ressources des terminaux en termes de bande passante et de capacités de stockage. Par contraste, le dispositif de l'invention relève d'une interaction entre l'émission et la réception, utilisant à la fois les informations fournies à l'émission (renseignements sur les programmes informatiques requis) et des informations locales (disponibilité des programmes informatiques requis, critères de décision sur le téléchargement).

De cette manière, le récepteur peut s'adapter automatiquement et avec souplesse à la situation, en décidant ou non de télécharger les programmes informatiques (préférentiellement des plug-ins) requis par les services reçus ultérieurement. Dans une réalisation aboutie de l'invention, le récepteur est capable de déclencher le téléchargement des programmes informatiques manquants à chaque fois que ce téléchargement est satisfaisant à la fois pour l'émetteur et pour l'utilisateur des services, et d'éviter cette opération dans les autres cas. Le contenu d'un service n'est donc pas acquis par un terminal si ce dernier n'est pas capable de l'exécuter.

Ainsi, dans des modes préférés de réalisation pouvant être combinés :
- le téléchargement a lieu uniquement s'il est achevé lors de l'instant de démarrage du service concerné, dans la mesure où initier le service en cours de route est considéré comme sans intérêt (par exemple, jeu interactif au cours d'une émission, dans lequel rater le début du jeu revient à une perte certaine) ;
- le téléchargement a lieu uniquement s'il est achevé lors d'un instant prédéfini avant la fin du service concerné, dans la mesure où initier le service en cours de route est considéré comme utile (par exemple, résultats de foot pendant un match) ;
- le téléchargement est effectué même s'il ne peut pas être exploité pour le service concerné, car le programme informatique téléchargé est très utile en général et sera disponible pour d'autres services, ou sera utile pour les occurrences suivantes du service concerné ;
- le téléchargement est effectué seulement s'il reste confiné à une bande passante prédéfinie et/ou s'il n'occupe qu'un espace de stockage limité prédéfini.

Les informations envoyées peuvent être ou non directement prévues pour ce processus de décision. Il peut notamment s'agir d'un indicateur imposant le téléchargement d'un plug-in dans toutes circonstances, quitte à ce que ce plug-in ne devienne disponible qu'en cours d'exécution du service associé à cet indicateur, ou même que ce plug-in ne soit pas téléchargé à temps pour ce service mais serve à des services ultérieurs. Il peut aussi s'agir d'informations accessibles dans des messages d'annonce de services indépendamment de cette application particulière, concernant par exemple l'identité du plug-in (comme dans la norme MHP). Dans tous les cas, un aspect important de l'invention est la combinaison du critère de décision au niveau réception et de l'exploitation de ces informations.

Au surplus, des éléments complémentaires à ces informations peuvent intervenir dans la décision, tels que par exemple des ressources locales.

Le dispositif de décision est avantageusement incorporé dans un terminal (tel que notamment un téléviseur ou un poste de radio interactif ou une STB). Cependant, dans d'autres formes d'implémentations, il est placé dans un récepteur intermédiaire entre l'émetteur et les terminaux. Par exemple, un tel récepteur est utilisé pour un groupe de terminaux mettant en commun des réserves de bande passante et de stockage (société, immeuble...).

Le réseau de communications utilisé pour transmettre les services peut être quant à lui mono ou bi-directionnel. Le mode de transmission des informations associées aux services s'effectue de préférence, mais non nécessairement, à travers ce même réseau. Par exemple, les services et les informations sont communiquées par broadcasting sur un même réseau via le câble, par voie hertzienne ou par satellite. Dans un autre exemple, les informations sont communiquées par Internet (ou plus généralement, par la voie de retour) avant que les services associés ne soient radiodiffusés.

Un cas particulièrement avantageux pour sa commodité de mise en oeuvre et sa facilité d'implémentation au regard des normes existantes, est celui où les informations sont communiquées au sein même des services concernés, dans les messages d'annonce de services, notamment pour les normes ATVEF et MHP (les services comprenant des messages d'annonce de services et des contenus). Le module de réception est alors prévu pour recevoir les informations associées à ces services, dans les messages d'annonce de services et le module d'identification de renseignements est prévu pour extraire les renseignements dans ces messages d'annonce de services.

Ainsi, dans une forme préférée de réalisation, on embarque dans le service interactif à la fois des informations décrivant les plug-ins qu'il utilise, et une information forçant ou non le téléchargement, afin que le terminal puisse décider ou non de télécharger ces plug-ins. Ces informations sont avantageusement renseignées lors de l'édition du service interactif à partir d'un formulaire par exemple. Ainsi, lors de la génération des données du service interactif, ces informations sont insérées dans les fichiers composant le service. Le terminal comprend quant à lui un algorithme de décision de téléchargement ou non des plug-ins suivant leur taille et la durée de vie du service.

Dans le monde de la TV analogique et de l'ATVEF, ces informations sont avantageusement insérées dans la partie SDP de l'announcement (pour « Session Description Protocol », format de la charge utile du message d'annonce de service) sous la forme d'une liste de plug-ins requis. Ces informations complémentaires sont préférentiellement indiquées de manière globale pour tout le service. Dans le cas d'un service ATVEF, par exemple, il n'est en effet pas souhaitable d'indiquer dans chacune des pages HTML composant le service interactif quels sont les plug-ins requis pour exécuter cette page. Ceci aurait pour conséquence d'alourdir chacune des pages du service et surtout, une première page d'un service pouvant être affichable par le terminal mais pas une seconde page, l'utilisateur risquerait de n'avoir accès qu'à une partie du service, sans pouvoir y naviguer.

Dans le monde de la TV numérique et de DVB, ces informations sont avantageusement insérées dans des descripteurs du flux de signalisations, sous la forme d'identificateurs attribués à partir de tables listant tous les plug-ins existants et disponibles.

Connaissant ces pré-requis, le terminal peut alors décider dans un premier temps du téléchargement ou non des versions de plug-ins et de logiciel éventuellement requises et non disponibles, puis dans un second temps de l'affichage ou non du service interactif.

Préférentiellement, les informations associées aux services comprenant des informations temporelles relatives à la validité d'exécution de ces services, le module de décision sélective d'obtention est capable d'autoriser et d'interdire le téléchargement au moins en fonction de ces informations temporelles. Il est en effet intéressant de tenir compte de la chronologie de déroulement d'un service (début, fin, étape déterminante...) pour prendre ou non la décision de téléchargement, cette chronologie étant généralement synchronisée avec la diffusion générale de programmes associés.

Avantageusement, le module de décision sélective d'obtention est alors prévu pour autoriser le téléchargement si ce téléchargement est destiné à être achevé avant des instants prédéfinis des services, extractibles des informations temporelles, et à interdire ce téléchargement sinon.

Ainsi, selon une première forme de prise en compte de ces informations temporelles, ces instants prédéfinis spécifient des fins de validité d'exécution des services. Dans le cas d'un service de longue durée

(tel un service de type portail accessible en continu quotidiennement ou la retransmission d'un événement sportif comme un match de football), il est en effet important de télécharger le(s) plug-in(s) manquant(s) (opération prenant seulement quelques minutes) et ensuite de proposer le service au téléspectateur.

Selon une deuxième forme de prise en compte de ces informations temporelles, ces instants prédéfinis spécifient des débuts de validité d'exécution des services. Les deux formes sont avantageusement combinées, dans la mesure où une information complémentaire reçue permet de discriminer les deux cas (par exemple un indicateur spécifique sur le critère de décision, ou un renseignement sur le type de service tel que « portail accessible en continu »).

Dans les cas où l'autorisation de téléchargement est tributaire des instants prédéfinis des services, le module de décision sélective d'obtention est préférentiellement capable d'acquérir des durées de téléchargement des programmes informatiques requis et non disponibles localement, et d'estimer ainsi quand ce téléchargement est destiné à être achevé. Ce mode d'acquisition est avantageusement obtenu à partir d'informations reçues telles que les tailles des programmes informatiques, et d'informations locales telles que la bande passante disponible.

Préférentiellement, les informations associées aux services comprenant au moins un indicateur de téléchargement forcé ayant une valeur activée et une valeur désactivée, le module de décision sélective d'obtention est prévu pour forcer en autorisation le téléchargement si cet indicateur de téléchargement forcé a la valeur activée.

Plus précisément et à titre d'exemple, même lorsque télécharger le(s) plug-in(s) manquants ne permet pas d'afficher l'occurrence courante d'un service (temps de téléchargement supérieur à la durée de vie du service), il peut être malgré tout intéressant de forcer le terminal à télécharger ce(s) composant(s) manquant(s) pour l'une des raisons suivantes :
- ce service interactif (une publicité de courte durée par exemple) doit être émis n fois au cours du mois et à chaque diffusion de la publicité interactive, le terminal n'a pas le temps de télécharger le plug-in ; sans la disposition ci-dessus, il ne proposerait donc jamais ce service au téléspectateur ; le mode de réalisation avec indicateur de téléchargement forcé permet de forcer le téléchargement de ce plug-in pour que le téléspectateur puisse profiter des n-1 diffusions restantes de la publicité ;
- ce plug-in est tellement répandu qu'il est incontournable ; dans ce cas, le mode de réalisation avec indicateur de téléchargement forcé permet de forcer tous les terminaux du parc à l'acquérir, même s'il ne peut pas être utilisé par le service proposé à cet instant.

Dans ces deux cas, on prévoit que les plug-ins téléchargés soient sauvés de manière permanente, c'est à dire qu'ils soient installés en mémoire Flash ou sur disque dur.

Préférentiellement, et de manière générale, le dispositif de décision conditionnelle d'exécution de l'invention comprend aussi un module d'acquisition de tailles des programmes informatiques requis et non disponibles localement et le module de décision sélective d'obtention est capable d'autoriser et d'interdire le téléchargement aussi en fonction de ces tailles.

Une première forme d'exploitation de ces tailles a déjà été mentionnée plus haut : le module de décision sélective d'obtention est prévu pour évaluer des durées de téléchargement des programmes informatiques requis et non disponibles localement en fonction de ces tailles et de capacités de réception locales des programmes informatiques, et pour autoriser le téléchargement lorsque ce dernier permet une exécution ultérieure au moins partielle des services.

Selon une deuxième forme d'exploitation de ces tailles (pouvant être combinée avec la première), le module de décision peut décider de ne pas autoriser le téléchargement bien que les informations arrivent longtemps avant le contenu d'un service associé, du fait de ressources trop limitées du récepteur au regard de la taille d'un des programmes informatiques requis. Cette limitation des ressources peut être inhérente au récepteur (modem trop lent, espace disque ou plus généralement de stockage trop restreint) ou résulter du mode d'exploitation de récepteur (bande passante devant rester disponible essentiellement pour d'autres types de réceptions, et ne laissant libres par exemple que 10 %).

L'invention concerne aussi un procédé de décision conditionnelle d'exécution de services reçus via un réseau de communications, correspondant au dispositif de décision conditionnelle de l'invention, et préférentiellement destiné à être mis en oeuvre au moyen d'un tel dispositif selon l'une quelconque de ses modalités de réalisation.

L'invention porte également sur un dispositif de constitution de messages d'informations associées à des services, ces messages étant destinés à être diffusés à des utilisateurs avant des exécutions des services associés. Ce dispositif comprend des moyens d'incorporation dans les messages, de renseignements relatifs à des programmes informatiques requis pour l'exécution de ces services.

Selon l'invention, les moyens d'incorporation sont prévus pour inclure dans ces renseignements au moins un indicateur de téléchargement forcé ayant une valeur activée et une valeur désactivée, cet indicateur étant destiné à forcer une autorisation de téléchargement des programmes informatiques requis si l'indicateur a la valeur activée.

Ce dispositif de constitution de messages est préférentiellement destiné à produire des messages destinés à un dispositif de décision conditionnelle d'exécution conforme à l'un quelconque des modes de réalisation de l'invention.

L'invention s'applique de plus à un procédé de constitution de messages d'informations correspondant au dispositif de constitution de messages d'informations de l'invention, préférentiellement mis en oeuvre au moyen d'un tel dispositif de constitution de messages.

L'invention a aussi pour objet un produit programme d'ordinateur comprenant des instructions de codes de programme pour l'exécution des étapes du procédé de décision conditionnelle d'exécution ou du procédé de constitution de messages d'informations selon l'invention, lorsque ce programme est exécuté sur un ordinateur. Par « produit programme d'ordinateur », on entend un support de programme d'ordinateur, qui peut consister non seulement en un espace de stockage contenant le programme, tel qu'une disquette ou une cassette, mais aussi en un signal, tel qu'un signal électrique ou optique.

L'invention porte également sur un message d'informations de contrôle destinées à être exploitées automatiquement par au moins un récepteur et associées à au moins un service, ce message étant prévu pour être diffusé au récepteur avant une exécution de ce service, et comprenant des renseignements relatifs à au moins un programme informatique requis pour l'exécution de ce service.

Selon l'invention, ces informations comprennent au moins un indicateur de téléchargement forcé ayant une valeur activée et une valeur désactivée, cet indicateur étant destiné à forcer une autorisation de téléchargement du programme informatique requis si l'indicateur a la valeur activée.

Le message d'informations de contrôle de l'invention est préférentiellement destiné à être produit par un dispositif de constitution de messages conforme à l'invention.

L'invention s'applique de plus à un décodeur, caractérisé en ce qu'il comprend un dispositif de décision conditionnelle d'exécution conforme à l'une quelconque des formes de réalisation de l'invention.

L'invention sera mieux comprise et illustrée au moyen des exemples suivants de réalisation et de mise en oeuvre, nullement limitatifs, en référence aux figures annexées sur lesquelles :
- la Figure 1 est un schéma de principe d'un ensemble d'émission et de réception mettant en oeuvre un dispositif de décision conditionnelle d'exécution selon l'invention ;
- la Figure 2 représente de manière plus détaillée, sous forme de schéma blocs, le dispositif de décision conditionnelle de la Figure 1 ;
- la Figure 3 montre un dispositif de constitution de messages d'informations selon l'invention, utilisé dans l'ensemble de la Figure 1 ;
- la Figure 4 illustre sous forme d'organigramme un processus de décision d'affichage d'un service par le dispositif de décision conditionnelle des Figures 1 et 2 ;
- la Figure 5 représente une mise en oeuvre logicielle de l'ensemble de la Figure 1, selon un premier mode de réalisation du dispositif

de décision conditionnelle d'exécution, avec terminal interactif et appliqué à la norme ATVEF ;
- la Figure 6 détaille le terminal interactif de la Figure 5 ;
- la Figure 7 développe sous forme d'organigramme un processus de décision de téléchargement de plug-ins et d'affichage d'un service, au moyen du dispositif de décision conditionnelle d'exécution du terminal interactif des Figures 5 et 6 ;
- la Figure 8 détaille un terminal interactif incorporant un deuxième mode de réalisation du dispositif de décision conditionnelle d'exécution des Figures 1 et 2, appliqué à la norme MHP ;
- la Figure 9 illustre un déroulement typique d'étapes d'un processus obtenu au moyen du terminal interactif de la Figure 8 ;
- et la Figure 10 schématise un ordinateur personnel incorporant un troisième mode de réalisation du dispositif de décision conditionnelle d'exécution des Figures 1 et 2.

Sur les figures, des éléments identiques ou similaires sont désignés par les mêmes références. Des éléments correspondants mais ayant des identités distinctes sont indiqués par des nombres identiques et des suffixes différents (les suffixes A et B se référant respectivement aux normes ATVEF et MHP).

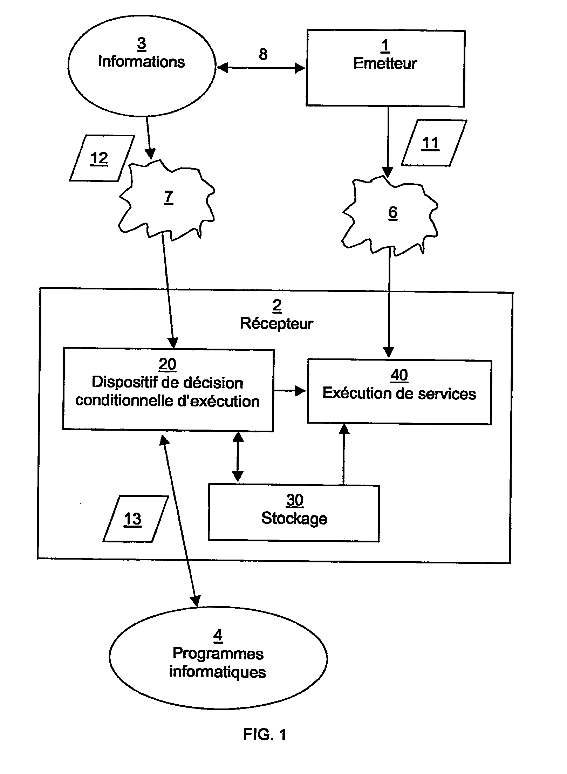

De plus, les entités fonctionnelles décrites et illustrées (en particulier sur les Figures 1 à 3) ne correspondent pas nécessairement à des entités physiquement distinctes des systèmes, mais peuvent par exemple consister en des fonctionnalités d'un même logiciel ou en des circuits d'un même composant. *A contrario,* un même module peut être implémenté sous forme de plusieurs entités séparées physiquement.

Un ensemble d'émission et de réception (Figure 1) comprend un émetteur 1 et un récepteur 2, communiquant via un réseau 6, l'émetteur 1 étant prévu pour transmettre des services 11 au récepteur 2.

Le récepteur 2 est pourvu d'une unité d'exécution 40 de services et d'un dispositif de décision conditionnelle d'exécution 20 des services 11 reçus. Il dispose aussi d'un espace de stockage 30, prévu pour stocker en particulier des fonctionnalités informatiques utilisées pour l'exécution des services 11.

L'ensemble d'émission et de réception inclut de plus une source 3 d'informations en relation avec l'émetteur 1 via une liaison 8, apte à fournir au dispositif de décision conditionnelle 20 des informations 12 associées aux services 11 via un réseau 7 (qui peut être identique au réseau 6). Ces informations 12 comprennent en particulier des renseignements relatifs à des programmes informatiques requis pour l'exécution des services 11. Une source 4 de programmes informatiques permet au dispositif de décision conditionnelle 20 de déclencher un téléchargement de programmes informatiques 13 requis pour l'exécution des services 11 vers le récepteur 2, notamment en vue d'une sauvegarde dans l'espace de stockage 30.

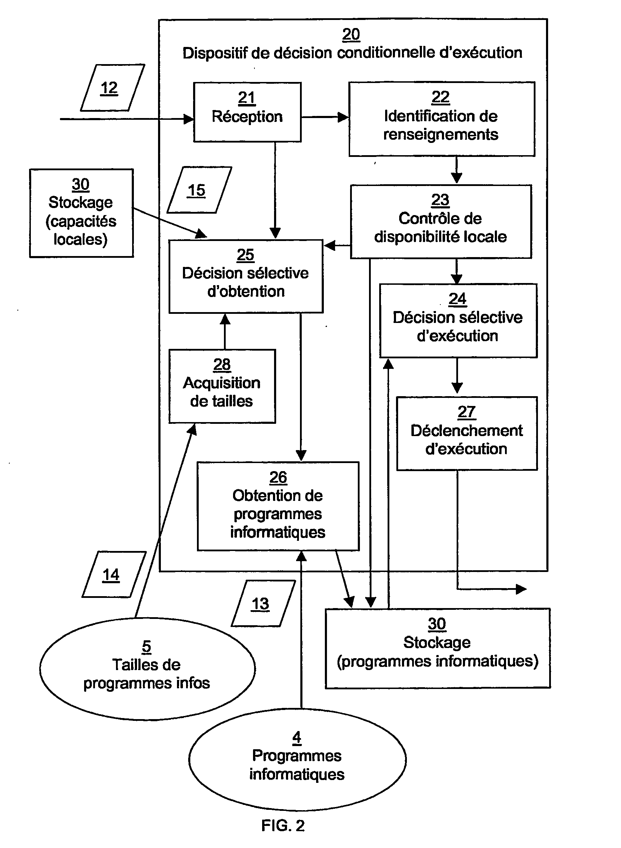

Plus précisément (Figure 2), le dispositif de décision conditionnelle d'exécution 20 comprend :
- un module de réception 21 des informations 12 associées aux services 11,
- un module d'identification 22 au sein de ces informations 12, des renseignements sur les programmes informatiques requis pour l'exécution des services 11 ;
- un module de contrôle 23 de disponibilité locale (dans l'espace de stockage 30) des programmes informatiques ainsi identifiés ;
- un module de décision sélective d'exécution 24 des services 11, si les programmes informatiques requis sont disponibles localement ;
- un module de déclenchement 27 d'exécution de ces services 11 (aux moments appropriés) ;
- un module de décision sélective automatique d'obtention 25 des programmes informatiques 13 requis et non disponibles localement, destiné à autoriser ou interdire le téléchargement de ces programmes informatiques ; pour ce faire, le module de décision sélective 25 est capable de tenir compte non seulement des renseignements extraits des informations 12 et d'autres éléments inclus dans ces informations 12 (tels que notamment les instants de début et de fin des services 11), mais aussi de capacités locales 15 du récepteur 2, par exemple enregistrées au préalable dans l'espace de stockage 30, et de tailles 14 des programmes informatiques 13 requis, accessibles au moyen d'un module d'acquisition 28 de tailles auprès d'une source 5 de tailles de ces programmes 13 ;
- et un module d'obtention 26 des programmes informatiques requis 13 auprès de la source 4 et d'enregistrement éventuel de ces programmes 13 dans l'espace de stockage 30, sur déclenchement du module de décision sélective d'obtention 25.

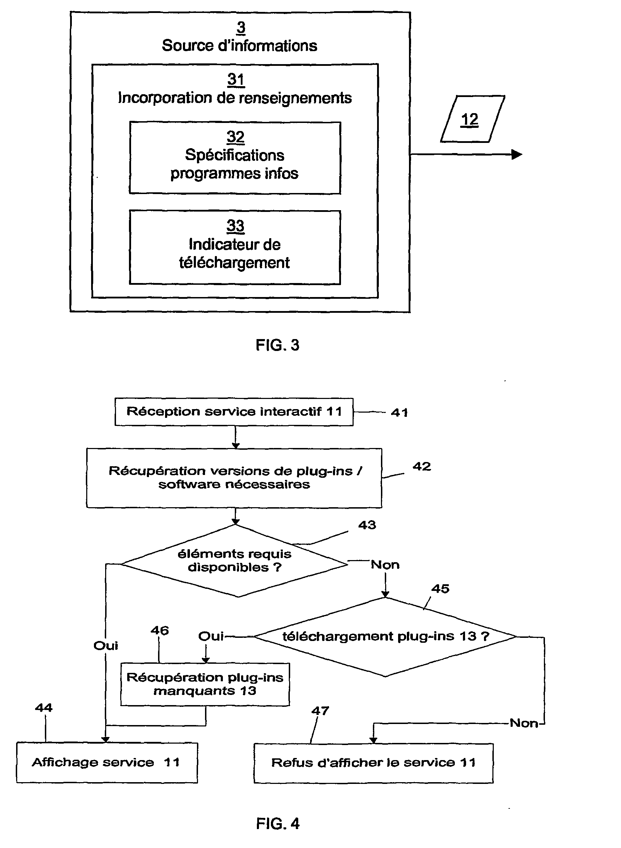

La source 3 d'informations (Figure 3) comprend quant à elle un dispositif d'incorporation 31 au sein de ces informations 12, des renseignements relatifs aux programmes informatiques requis. Le dispositif 31 inclut lui-même un module d'incorporation 32 de spécifications sur ces programmes informatiques (nom, version...) et un module d'incorporation 33 d'indications relatives au téléchargement de ces programmes informatiques (mode de téléchargement, adresse à contacter...).

En fonctionnement, le dispositif de décision conditionnelle 20 reçoit au préalable de la source 3 d'informations, des renseignements relatifs à des programmes informatiques requis pour l'exécution de services 11 qui vont suivre en provenance de l'émetteur 1. Si tous les programmes informatiques requis sont déjà disponibles pour le récepteur 2, le dispositif de décision sélective d'exécution 24 décide l'exécution le moment venu des services 11.

Dans le cas contraire, le dispositif de décision sélective d'obtention 25 applique un algorithme de choix pour décider si les programmes requis et non disponibles 13 doivent être ou non téléchargés. Si la réponse est positive, le module de décision sélective d'obtention 25 provoque le téléchargement des programmes informatiques 13 manquants, par le module d'obtention 26 en provenance de la source 4. Dans ce cas, si tout se passe correctement et que tous les programmes informatiques nécessaires sont ainsi à disposition du récepteur 2 en temps voulu, le module de décision sélective d'exécution 24 décide l'exécution au moment approprié des services 11, comme indiqué précédemment. Dans les cas où le module de décision sélective d'obtention 25 décide de ne pas autoriser le téléchargement, ou lorsque ce téléchargement est décidé mais s'avère défectueux, ou encore lorsqu'il se passe normalement mais est achevé trop tard, le module de décision sélective d'exécution 24 décide de ne pas exécuter les services 11 concernés.

Dans un cas particulier (Figure 4) dans lequel le service répond à la norme ATVEF ou MHP, les informations 12 relatives à un service interactif 11 sont envoyées dans un message d'annonce de ce service. Dès que le récepteur 2 reçoit ce message d'annonce (étape 41), il identifie des versions de plug-ins et de software nécessaires pour afficher correctement ce service (étape 42). Il vérifie ensuite si tous les éléments requis sont disponibles localement (étape 43) et en cas de réponse positive, affiche au moment opportun le service interactif (étape 44). Dans le cas contraire, il prend une décision de téléchargement ou non des éléments manquants (étape 45). Si cette décision est négative, il refuse d'afficher le service interactif (étape 47). Si elle est positive, il récupère les éléments manquants (étape 46) et affiche le service interactif (étape 44).

Des modes de réalisation plus spécifiques vont maintenant être détaillés pour respectivement des services ATVEF, MHP et dans le monde des ordinateurs personnels ou PCs.

### 1/ Services ATVEF

La solution fondée sur l'ATVEF exposée ci-dessous s'applique aussi bien au monde analogique qu'au monde numérique. Toutes les implications de la solution sont détaillées par la suite (depuis l'édition d'un service interactif jusqu'à sa réception sur un terminal).

La mise en oeuvre lors de la création du service interactif 11 (dispositif d'incorporation de renseignements 31) inclut l'insertion des informations 12 relatives à ce service dans l'announcement. Dans le cadre de la technologie de TV interactive commercialisée sous le nom de TAK, par exemple, ces informations 12 sont renseignées au moment de l'édition du service interactif 11, par exemple à partir d'un formulaire. La société TAK fournit à chaque fournisseur de service ou prestataire éditant des services interactifs un pack d'édition de service. Ce pack contient un logiciel d'édition et un simulateur composé d'une TV interactive, d'un serveur de données minimaliste et d'un module d'insertion vidéo. Dans une variante, le pack comprend uniquement un ordinateur personnel (PC pour « Personal Computer ») et un téléviseur reliés par un lien série ou un bus USB (pour « Universal Serial Bus »). Le processus d'édition comprend ainsi des étapes :
- de création du service interactif 11 (développement du service interactif par écriture des pages HTML, des animations Flash, des instructions en langage JavaScript... et par description de différents déclencheurs) ;
- de renseignement d'un formulaire de description des plug-ins utilisés (par exemple animation Flash4 embarquée) et d'un indicateur permettant de forcer le téléchargement ;
- et de génération des fichiers ATVEF composant ce service interactif 11 (génération de l'announcement ATVEF, de l'ensemble de contenus - pages HTML et éventuels fichiers Flash et images - et des dédencheurs).

En ce qui concerne le format des informations 12, un premier champ permet de décrire le média en indiquant le(s) plugin(s) requis. Cette description se compose de deux paramètres :
- le format du média (Flash, MP3...),
- et la version de ce média,
   ce champ se trouvant autant de fois qu'il y a de plug-ins. Un autre champ unique permet quant à lui de forcer le téléchargement et l'installation des plug-ins manquants.

Par exemple, l'announcement est encapsulé suivant des couches de transport répondant à la norme ATVEF en Europe, et comprend un en-tête au format SAP (pour « Session Announcement Protocol ») et une charge utile au format SDP (pour « Session Description Protocol », cf. le document RFC 2327 - Request For Comment). Les informations décrivant le service interactif 11 trouvent place dans le SDP, qui offre un champ attribut « a= » adaptable par l'utilisateur.

On insère la liste des plug-ins utilisés ainsi que la version requise au niveau du SDP sous la forme :
a=<attribut> :<valeur>
   avec:
   <attribut> = mediaFormat ou mediaVersion
      et
   <valeur> = une chaîne de caractères.

Pour l'attribut mediaVersion, qui est optionnel, <valeur> est alors du type :
<VersionMajor[Separateur][VersionMinor]>
   le champ VersionMajor étant obligatoire et le séparateur, qui doit être connu des terminaux, n'ayant de raison d'être que lorsque VersionMinor est précisé.

Par exemple, si on a affaire à un plug-in du type MonPlugin 4.3 et si le séparateur choisi est la virgule (« , »), alors :
mediaFormat = MonPlugin
mediaVersion = 4,3

Si le champ mediaVersion est présent, il est nécessairement rattaché au champ mediaFormat précédent. S'il est absent, alors soit il n'y a pas de version à préciser, soit il n'y a utilisation que des fonctionnalités de base offerte par le plug-in, donc le service est affichable correctement quelle que soit la version du plug-in présente.

L'indicateur permettant de forcer le téléchargement des plug-ins s'ils sont absents est aussi inséré au niveau du SDP sous la forme :
a=mediaDownload: *true* ou *false*

Par défaut, si cet attribut mediaDownload n'est pas indiqué, il est considéré comme non actif (*false*). Par conséquent, le terminal prend alors la décision de télécharger le(s) plug-in(s) ou non. Sinon, s'il lui est affecté la valeur *true,* alors dans tous les cas, les plug-ins sont téléchargés.

**Un exemple de SDP est développé ci-après :**
v=0
o= - 921216992 921216992 IN IP4 172.30.90.160
s=TMM
e=dupont@thmulti.com
p=+1-650-470-4860
a=lang:en
a=tve-ends:300
a=tve-type:primary
a=tve-id:79f3711c-40c3-11c4-ded7-1932f6457700
a=tve-profile:1
**a>mediaformat: Flash**
**a=mediaVersion : 4**
**a=med.aFormat: MET-5**
**a=mediaFormat: MP3**
**a=mediaDownload : true**
sdpattribute=foo
**t=2873397496 2873404696**
m=data 22814 tve-trigger
c=IN IP4 227.37.32.27
m=data 22815 tve-file
c=IN IP4 224.37.32.21

Dans cet exemple, le navigateur (« browser ») du terminal doit supporter Flash4, des applications multimédias selon la norme MHEG (pour « Multimédia Hypermedia Expert Group »), ainsi que des fichiers audio au format MP3. De plus, si un ou plusieurs composants sont absents, ils devront être téléchargés.

Il est intéressant de remarquer que :
- ces attributs sont des attributs au niveau média et non au niveau session, c'est à dire qu'ils permettent de décrire le média mais qu'ils sont indépendants de la session courante ;
- ces attributs de description de média doivent être insérés après les attributs de description de session (cf. RFC 2327) ;
- et si un récepteur « ne comprend pas » ces attributs, alors il les ignore.

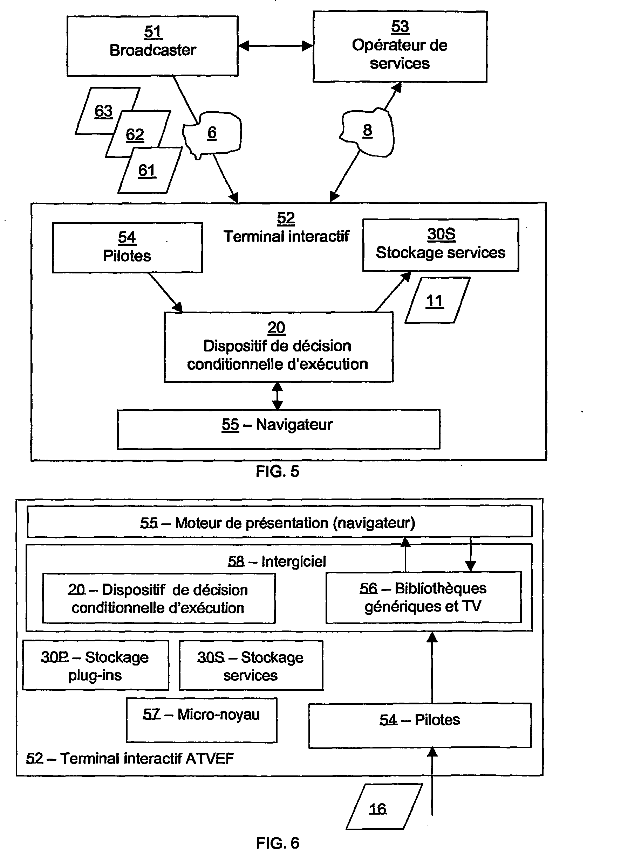

L'implémentation de cette réalisation dans un terminal interactif 52 (Figure 5) pour télévision analogique va maintenant être explicitée. Le terminal 52 comprend sous forme de composants logiciels :
- un ou plusieurs pilotes 54 (« drivers ») VBI (pour « Vertical Blanking Interval »), destinés à extraire des données transportées dans le signal AV reçu (services 11 et informations 12) ; dans le monde de la TV numérique, ce composant est remplacé par un démultiplexeur ;
- un navigateur 55 (« browser »), chargé de gérer les services interactifs 11 ; il affiche les services 11, reçoit des commandes d'un téléspectateur à travers une télécommande et exécute des actions demandées (hyper-navigation, exécution d'un script, etc.) ;
- le dispositif de décision conditionnelle d'exécution 20 (sous forme logicielle), capable de récupérer les plug-ins requis 13 pour afficher les services 11 et non disponibles ;
- et les services interactifs 11 (pouvant inclure notamment pages HTML, instructions en langage JavaScript et animations Flash) dans une zone de stockage 30S.

Un broadcaster 51 (l'émetteur 1) communique les services 11 ATVEF au terminal 52 via le réseau 6, chacun de ces services 11 comprenant un announcement 61, contenu(s) 62 et trigger(s) 63. Ce broadcaster 51 est en relation bilatérale avec un opérateur de services 53, qui communique avec le terminal 52 via un réseau 8 de communication bidirectionnel.

Les décisions de téléchargement et d'affichage ou non de l'un des services 11 sont avantageusement prises par le dispositif de décision conditionnelle d'exécution 20 avant même l'acquisition du contenu 62 de ce service, afin de ne pas charger le terminal 52 avec des données inutiles qu'il est de toute façon incapable de traiter. Avant d'ouvrir des canaux d'écoute sur le contenu 62 et les déclencheurs 63, le terminal interactif 52 vérifie ainsi s'il est apte ou non à afficher le service interactif 11 lors de la réception de l'announcement 61. S'il n'est pas apte à l'afficher (il n'a pas tous les plug-ins requis et il n'a pas le temps de les télécharger avant la fin de vie du service 11), alors il peut ne pas se mettre à l'écoute du contenu 62 et l'ignorer.

Plus précisément, le terminal interactif 52 (Figure 6) comprend (composants logiciels et stockages associés) outre les pilotes 54, le navigateur 55 et la zone de stockage 30S des services 11, un micro-noyau 57, un « intergiciel » (logiciel servant d'intermédiaire transparent entre logiciels d'application et réseau, désigné par « middleware » en anglais) 58 incluant des bibliothèques 56 génériques et de télévision (broadcasting, communication) ainsi que le dispositif de décision conditionnelle d'exécution 20, et une zone de stockage 30P de plug-ins.

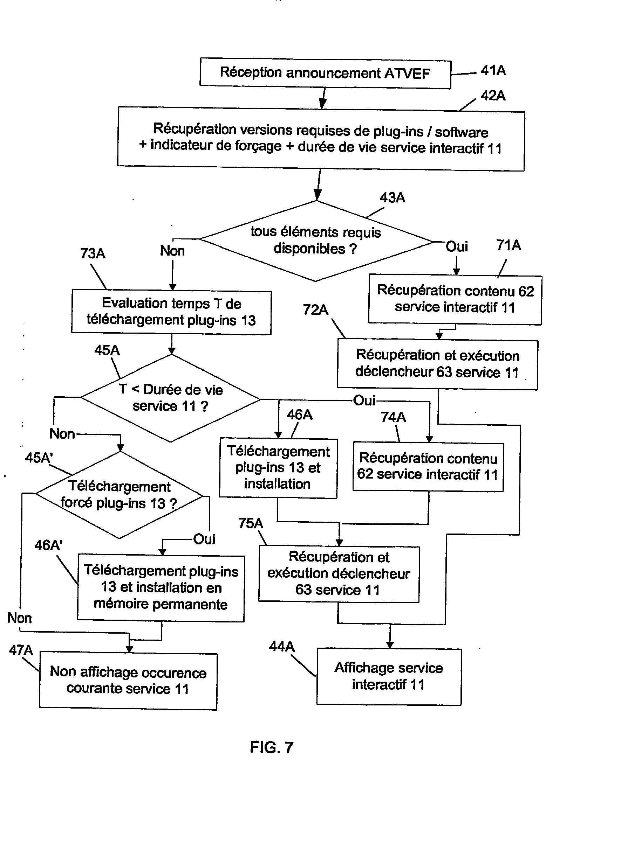

En fonctionnement, lors de la réception d'un flux audiovisuel 16 diffusé, les drivers 54, syntoniseur (« tuner », non représenté) et filtre limiteur VBI (« slicer » VBI, non représenté) séparent les données d'informations, des programmes vidéo et audio. Les programmes audiovisuels sont alors proposés au téléspectateur et, s'il en existe, un service interactif 11 est candidat pour s'afficher à l'écran. C'est là qu'intervient le processus de filtrage mis en oeuvre par le dispositif de décision d'exécution conditionnelle 20 (Figure 7).

Le processus de filtrage comprend les étapes suivantes :
- réception d'un paquet ATVEF sous la forme d'une pile de protocoles requis dans le monde de la TV analogique en Europe, et extraction des paquets de niveaux IDL B (pour « Independent Data Line »), désencapsulation des couches IDL B et SLIP (pour « Serial Une Internet Protocol »), et vérification et correction si besoin des codes d'erreur (FEC, pour « Forward Error Correction ») ; direction des paquets UDP (pour
   « Unidirectional Data Protocol ») / IP ainsi obtenus vers le navigateur 55 par les bibliothèques 56 génériques de broadcasting ;

- si un paquet arrive sur le canal d'écoute des announcements 61 ATVEF (étape 41A), alors le navigateur 55 le désencapsule et récupère la charge utile SDP ;
- le dispositif de décision conditionnelle d'exécution 20 effectue diverses vérifications, et récupère les paramètres et la liste des plug-ins requis pour l'exécution du service 11 concerné (étape 42A) ; il récupère aussi la valeur de l'indicateur capable de forcer le téléchargement des plug-ins et la durée de vie du service interactif 11 (champ tve_ends de la charge utile SDP, valeur indiquée par l'attribut *t= <start time> <stop time*>) ;
- le dispositif 20 compare la liste de plug-ins requis à une liste embarquée (étape 43A) ;
- si les plug-ins requis par le service diffusé sont présents dans la liste des plug-ins embarqués, alors le service 11 est accepté, c'est à dire que le navigateur 55 ouvre alors un canal d'écoute sur le contenu 62 ATVEF (récupération du contenu 62 dans l'étape 71A) et un canal d'écoute sur les déclencheurs 63 (récupération des déclencheurs 63 dans l'étape 72A) ; le service interactif 11 est ainsi affiché (étape 44A) ;
- sinon, le dispositif 20 évalue le temps de téléchargement de l'ensemble des plug-ins requis manquants 13 (étape 73A) et le compare à la durée de vie du service (étape 45A) ;
- si ce temps (plus une constante) est supérieur à la date d'expiration du service 11, alors le dispositif 20 vérifie la valeur de l'indicateur de forçage du téléchargement des plug-ins (étape 45A') ; suivant le cas, le téléchargement ou non des plug-ins 13 est effectué (étape 46A' pour le téléchargement forcé), mais le service 11 n'est en aucun cas acquis et affiché (étape 47A) ; dans le cas où les plug-ins 13 sont téléchargés, ils sont alors installés en mémoire permanente ;
- si ce temps (plus la constante) est inférieur à la date d'expiration du service 11, alors le téléchargement des plug-ins est effectué

(étape 46A) et parallèlement le service 11 est acquis (étape 74A, le navigateur 55 ouvre alors un canal d'écoute sur le contenu 62 ATVEF et un canal d'écoute sur les déclencheurs 63) ; une fois que les plug-ins sont installés sur le terminal 52, le navigateur 55 écoute le canal ouvert sur les déclencheurs 63 et dès la réception d'un déclencheur d'affichage (étape 75A), affiche le service 11 (étape 44A).

L'évaluation du temps de téléchargement d'un plug-in requis et non disponible 13 et les modalités de téléchargement vont maintenant être détaillées.

On peut récupérer le plug-in 13 via deux types de canaux : soit par broadcasting (en provenance du broadcaster 51 ou d'un autre diffuseur), soit par une communication bidirectionnelle avec un serveur (via la voie de retour en provenance de l'opérateur de services 53 ou en provenance d'une autre source).

Par broadcasting, l'exploitant des terminaux ou l'opérateur de services 53 peut utiliser des moyens connus pour ce genre de mise à jour. Par exemple, il diffuse une signalisation décrivant au terminal 52 le moyen de récupérer les plug-ins diffusés par ailleurs. Le terminal 52, en analysant cette signalisation, peut alors mettre en oeuvre un processus de téléchargement des plug-ins manquants 13. L'avantage de cette méthode est qu'elle n'est pas coûteuse pour l'utilisateur du terminal 52, car aucune connexion téléphonique n'est requise. On trouvera décrite une implémentation particulière d'une telle méthode dans le document EP-1.245.116, qui expose des procédés de transmission et de réception de données de mise à jour. Selon la technique divulguée, des signaux d'annonce, indiquant à quel moment seront ultérieurement émis les données de mise à jour, précèdent l'émission de ces données.

Par communication avec un serveur, l'exploitant des terminaux ou l'opérateur de services 53 peut utiliser des moyens connus pour ce genre de mise à jour. Par exemple, il diffuse une signalisation décrivant au terminal 52 le moyen de récupérer les plug-ins 13 disponibles par ailleurs sur un serveur en ligne. Le terminal 52, en analysant cette signalisation, met alors en oeuvre un processus de téléchargement des plug-ins manquants 13 via la voie téléphonique ou ADSL (pour « Asymmetric Digital Subscriber Line »). Selon un autre mécanisme, on initie une connexion à un serveur et on démarre une négociation, invisible pour l'utilisateur du terminal 52, entre le terminal 52 et le serveur. Le serveur fournit alors au terminal 52 les plug-ins manquants 13.

Le temps de téléchargement estimé est fonction du type de canal permettant de le récupérer (débit) et de la taille du plug-in 13. Concernant la récupération de la taille, on peut procéder par voie broadcasting, par communication bidirectionnelle avec un serveur, ou par exploitation d'informations embarquées.

Par broadcasting, l'exploitant des terminaux ou l'opérateur de services 53 diffuse en continu un flux de signalisation indiquant les tailles courantes de chacune des dernières versions de plug-ins disponibles. Cette méthode a pour avantage sa rapidité, car il est inutile de se connecter et d'interroger un serveur en ligne (perte de temps).

Par communication avec un serveur, le terminal 52 est configuré pour se connecter à un serveur en ligne, en mesure de lui indiquer toutes les tailles des plug-ins connus. Cette méthode a pour avantage une économie de bande passante, car il est inutile de diffuser des données continuellement.

Pour l'exploitation d'informations embarquées, le terminal 52 possède une table de description des plug-ins connus, embarquée en mémoire permanente. Cette table peut être remise à jour régulièrement soit par broadcasting (émission de la table dans un flux par campagne de téléchargement), soit en ligne, lorsque le téléspectateur se connecte par exemple. Cette méthode a l'avantage d'offrir immédiatement la taille du plug-in requis 13 (le terminal 52 est donc apte à prendre la décision rapidement).

On peut aussi combiner les différentes méthodes. Par exemple, exemple, le terminal 52 commence par chercher la taille du plug-in requis 13 dans la table embarquée. Si ce plug-in 13 n'y est pas (la table est trop ancienne), le terminal 52 initie une connexion à un serveur en ligne pour récupérer l'information.

### 2/ Services MHP

Cette famille de réalisations concerne exclusivement le monde numérique.

Pour la mise en oeuvre lors de la création du service interactif 11 (dispositif d'incorporation de renseignements 31), les informations concernant les types d'applications utilisées (par exemple animation Flash4 embarquée) sont renseignées au moment de l'édition de ce service 11, par exemple à partir d'un formulaire. On génère ainsi un fichier contenant les sources du service interactif 11 et toutes les informations relatives à la bonne exécution de ce service (timing pour les déclencheurs, liste des plug-ins requis...). Lors de la création d'un flux MPEG (pour « Moving Picture Experts Group »), ce fichier est importé et les diverses informations sont renseignées dans les descripteurs du flux. Le format de ces informations est celui utilisé dans le monde de la TV numérique selon le standard MHP.

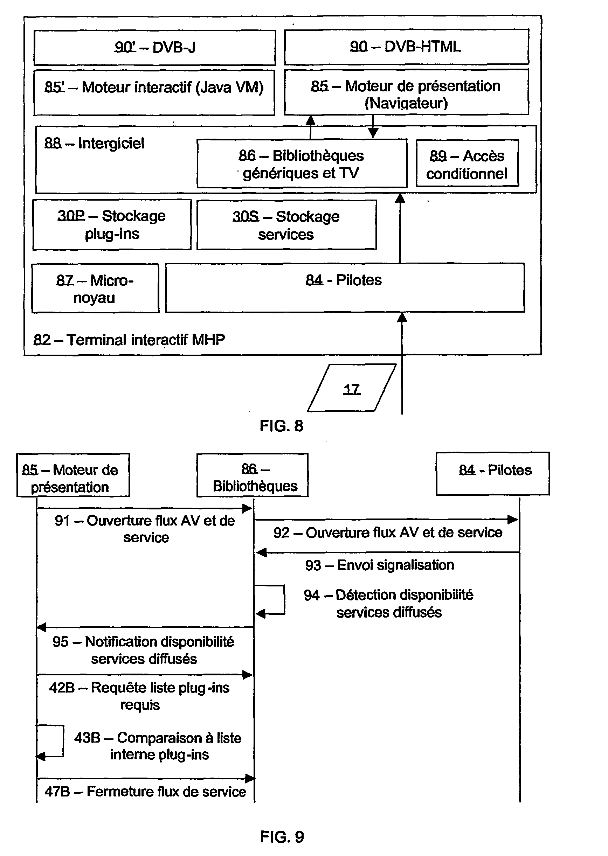

On va maintenant détailler une implémentation particulière du dispositif de décision d'exécution conditionnelle 20 dans un terminal interactif MHP référencé 82 (Figure 8). Le terminal 82 comprend des composants logiciels et de stockage qui incluent :
- des pilotes 84 ;
- un intergiciel 88 incluant des bibliothèques 86 génériques et de télévision (DVB-SI data - for « Service Information », communication...), une unité d'accès conditionnel 89 et le dispositif de décision conditionnelle d'exécution 20 ;
- un moteur de présentation 85 (navigateur) associé à une unité DVB-HTML référencée 90 ;
- un moteur interactif 85' (Java VM) associé à une unité DVB-J référencée 90' ;
- un micro-noyau 87 ;
- et des zones de stockage 30S et 30P respectivement de services interactifs et de plug-ins.

En fonctionnement, lors de la réception d'un flux MHP diffusé 17, les pilotes 84, un syntoniseur et un démultiplexeur permettent d'extraire tout d'abord la table PMT (pour « Program Map Table ») du train MPEG2 afin de récupérer la signalisation décrivant le contenu du flux 17 reçu.

D'une part, les programmes audiovisuels sont alors proposés au téléspectateur et d'autre part, s'il en existe, un service interactif 11 est candidat pour s'afficher à l'écran. C'est là qu'intervient le processus de filtrage du dispositif de décision conditionnelle d'exécution 20.

Les étapes du procédé peuvent être décrites de la manière suivante (Figure 9) :
- ouverture des trains audiovisuels et de service (étapes 91 et 92), et extraction de paquets MPEG2 contenant la signalisation ;
- récupération de la signalisation par les pilotes 84 et envoi aux bibliothèques 86 (étape 93), qui détectent la disponibilité du service 11 (étape 94) et la notifient au dispositif de décision conditionnelle d'exécution 20 (étape 95) ;
- les bibliothèques 86 en charge de gérer le SI permettent de récupérer un descripteur data_broadcast_id et de constituer ainsi la liste des plug-ins nécessaires pour que le service 11 s'affiche correctement sur l'écran du téléspectateur ; cette opération est pilotée par l'intergiciel 88 (étape 42B) ;
- cette liste est analysée puis comparée à une liste résidente de plug-ins embarqués (étape 43B) par le dispositif 20 ;
- si les plug-ins requis par le service diffusé sont présents dans la liste des plug-ins embarqués alors le service 11 est accepté ; sinon, le dispositif 20 décide si un téléchargement des plug-ins manquants 13 doit être effectué, de façon similaire à ce qui a été développé pour ATVEF ; si, comme dans l'exemple représenté, le dispositif 20 décide de ne pas procéder au téléchargement, le service 11 est ignoré (étape 47B).

### 3/ Monde PC

On s'intéresse essentiellement à des applications interactives pour TV sur PC (le PC étant branché sur un réseau de broadcasting). Lors de l'édition d'une page HTML (dispositif d'incorporation de renseignements 31), on définit des couples de champs de noms et de valeurs « NameNalue » pour spécifier des plug-ins requis pour l'exécution d'un service 11. Ces couples sont introduits au niveau de méta-données contenues dans l'en-tête de la page HTML, de la façon suivante :
<META NAME="mediaFormat" CONTENT="<Plugin Name>, [version]"> avec:
   <Plugin_Name> : paramètre obligatoire
   [version] : paramètre optionnel indiquant si nécessaire une version minimale du plug-in requis.

L'indication si les plug-ins manquants 13 doivent être téléchargés ou non avec forçage est insérée de la manière suivante :
<META NAME="mediaDownload" CONTENT="<TRUE or FALSE>"> avec:
   - si TRUE, téléchargement forcé des plug-ins manquants 13 ;
   - et si FALSE, décision par le navigateur 105 de télécharger ou non les plug-ins 13 suivant la durée de vie du service 11.

On insère aussi une notion de durée de vie du service :
<META NAME="ServiceValidityWindow" CONTENT="<Start Time>, <End Time>">

La page HTML a par exemple la forme suivante :
<HTML>
<!- DATE DE CREATION: 14/12/99 ->
<HEAD>
<TITLE></TITLE>
<META NAME="Description" CONTENT="">
<META NAME="Keywords" CONTENT="">
<META NAME="Author" CONTENT="Frederic Pasquier">
<META NAME="mediaFormat" CONTENT="Flash, 4">
<META NAME="mediaFormat" CONTENT="MP3">
<META NAME="mediaFormaf' CONTENT="MHEG-5">
<META NAME="mediaDownload" CONTENT="TRUE">
<META NAME="ServiceValidityWindow" CONTENT="2873397496, 2873404696">
</HEAD>
<BODY>
... Code HTML utilisant des formats Flash4, MP3 et PNG...
</BODY>
</HTML>

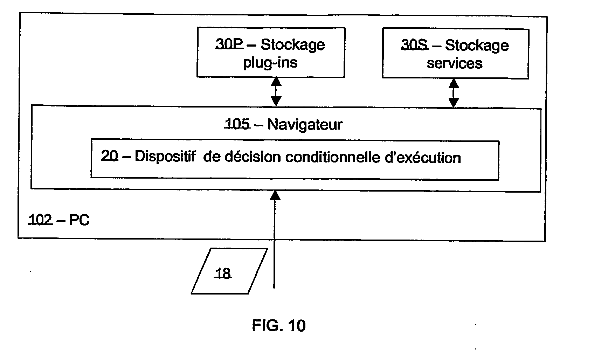

Un PC 102 apte à la mise en oeuvre du dispositif de décision conditionnelle d'exécution 20 (Figure 10) comprend un navigateur 105 incorporant ce dispositif 20, et des zones de stockage 30P et 30S respectivement de plug-ins et de services. Le navigateur 105 est adapté pour pouvoir récupérer et comprendre les couples Name/Value définis ci-dessus.

En fonctionnement, le PC 102 reçoit un flux 18 comprenant une page HTML avec un en-tête tel que décrit plus haut. Le navigateur 105 décide alors ou non le téléchargement et l'installation des plug-ins requis 13 et l'affichage du service 11 correspondant, selon un procédé similaire à celui exposé auparavant pour l'ATVEF. Les plug-ins disponibles ou téléchargés sont toujours installés sur le disque dur.

## Revendications

1. Dispositif de décision conditionnelle (20) d'exécution de services (11) liés à des programmes audiovisuels diffusés en mode de diffusion générale et reçus via un réseau de communications (6), **caractérisée en ce que** lesdits services (11) reçus ayant des durées de vie prédéterminées, lesdits durées de vie prédéterminées sont définies par des informations temporelles relatives à une validité d'exécution desdits services, lesdites informations temporelles comprenant des instants prédéfinis desdits services, les
services étant synchronisés avec lesdits programmes audiovisuels diffusés, ledit dispositif (20) comprenant :
- un module de réception (21) d'informations (12) associées aux dits services (11), prévu pour recevoir lesdites informations (12) préalablement à des exécutions desdits services (11);
- un module d'identification (22) parmi lesdites informations (12) reçues, de renseignements relatifs à des programmes informatiques requis pour l'exécution desdits services (11) associés aux dites informations (12);
- un module de contrôle (23) de disponibilité locale desdits programmes informatiques identifiés;
- un module de décision sélective d'exécution (24) de services, prévu pour autoriser l'exécution desdits services (11) si lesdits programmes informatiques requis pour lesdits services (11) sont disponibles localement;
- un module de décision sélective d'obtention (25) de programmes informatiques, capable d'autoriser et d'interdire le téléchargement desdits programmes informatiques requis (13) pour lesdits services (11) et non disponibles localement, au moins en fonction desdites informations temporelles, lesdites informations temporelles étant comprises dans desdites informations (12) associées aux dits services (11);
- un module d'obtention (26) de programmes informatiques, capable de télécharger lesdits programmes informatiques (13) requis pour lesdits services (11) sur déclenchement du module de décision sélective d'obtention (25).

2. Dispositif de décision conditionnelle (20) d'exécution selon la revendication 1, **caractérisé en ce que** lesdits instants prédéfinis spécifient des fins de validité d'exécution desdits services (11).

3. Dispositif de décision conditionnelle (20) d'exécution selon l'une des revendications 1 ou 2, **caractérisé en ce que** lesdits instants prédéfinis spécifient des débuts de validité d'exécution desdits services (11).

4. Dispositif de décision conditionnelle (20) d'exécution selon l'une quelconque des revendications précédentes, **caractérisé en ce que** lesdites informations (12) associées aux dits services (11) comprenant au moins un indicateur de téléchargement forcé ayant une valeur activée et une valeur désactivée, ledit module de décision sélective d'obtention (25) est prévu pour forcer en autorisation ledit téléchargement si ledit indicateur de téléchargement forcé a la valeur activée.

5. Dispositif de décision conditionnelle (20) d'exécution selon l'une quelconque des revendications précédentes, **caractérisé en ce que** lesdits services (11) comprenant des messages d'annonce (61, 81) de services (11) et des contenus (62), le module de réception (21) est prévu pour recevoir lesdites informations (12) associées aux dits services (11), dans lesdits messages d'annonce (61, 81) de services (11) et le module d'identification (22) de renseignements est prévu pour extraire lesdits renseignements dans lesdits messages d'annonce (61, 81) de services.

6. Procédé de décision conditionnelle d'exécution de services (11) liés à des programmes audiovisuels diffusés en mode de diffusion générale et reçus via un réseau de communications (6), **caractérisée en ce que** lesdits services (11) reçus ayant des durées de vie prédéterminées, lesdits durées de vie prédéterminées sont définiés par des informations temporelles relatives à une validité d'exécution desdits services, lesdites informations temporelles comprenant des instants prédéfinis desdits services, les services étant synchronisés avec lesdits programmes audiovisuels diffusés, ledit procédé comprenant :
- une étape de réception (41A) d'informations (12) associées aux dits services (11) préalablement à des exécutions desdits services (11);
- une étape d'identification (42A) parmi lesdites informations (12) reçues, de renseignements relatifs à des programmes informatiques requis pour l'exécution desdits services (11) associés aux dites informations (12);
- une étape de contrôle (43A) de disponibilité locale desdits programmes informatiques identifiés;
- une étape de décision sélective d'exécution (72A) de services, dans laquelle on autorise une exécution desdits services (11) si lesdits programmes informatiques requis pour lesdits services (11) sont disponibles localement;
- une étape de décision sélective d'obtention (45) de programmes informatiques, dans laquelle on décide entre autoriser et interdire le téléchargement desdits programmes informatiques requis (13) pour lesdits services (11) et non disponibles localement, au moins en fonction desdites informations temporelles, lesdites informations temporelles étant comprises dans desdites informations (12) associées aux dits services (11);
- une étape d'obtention (46A) de programmes informatiques, par téléchargement desdits programmes informatiques (13) requis pour lesdits services (11) sur déclenchement du module de décission sélective d'obtention (25).

7. Procédé de décision conditionnelle d'exécution, **caractérisé en ce que** ledit procédé est mis en oeuvre par un dispositif de décision conditionnelle d'exécution selon l'une quelconque des revendications 1 à 5.

## Patentansprüche

1. Vorrichtung zum bedingten Entscheiden (20) über eine Ausführung von Diensten (11) im Zusammenhang mit audiovisuellen Programmen, die in einem Rundsendemodus gesendet und über ein Kommunikationsnetz (6) empfangen werden, **dadurch gekennzeichnet, dass**, wobei die empfangenen Dienste (11) vorbestimmte Lebensdauern haben, die vorbestimmten Lebensdauern durch zeitliche Informationen bezüglich einer Freigabe der Ausführung der Dienste definiert sind, wobei die zeitlichen Informationen vordefinierte Zeitpunkte der Dienste umfassen, wobei die Dienste mit den gesendeten audiovisuellen Programmen synchronisiert sind, wobei die Vorrichtung (20) Folgendes umfasst:
- ein Modul zum Empfangen (21) von den Diensten (11) zugeordneten Informationen (12), das dafür vorgesehen ist, die Informationen (12) vor Ausführungen der Dienste (11) zu empfangen;
- ein Modul zum Identifizieren (22), unter den empfangenen Informationen (12), von Angaben, die sich auf Informationsverarbeitungsprogramme beziehen, die für die Ausführung der Dienste (11), denen die Informationen (12) zugeordnet sind, erforderlich sind;
- ein Modul zum Prüfen (23) der lokalen Verfügbarkeit der identifizierten Informationsverarbeitungsprogramme;
- ein Modul zum auf dem Auswahlprinzip beruhenden Entscheiden über die Ausführung (24) der Dienste, das vorgesehen ist, um die Ausführung der Dienste (11) zuzulassen, wenn die für die Dienste (11) erforderlichen Informationsverarbeitungsprogramme lokal verfügbar sind;
- ein Modul zum auf dem Auswahlprinzip beruhenden Entscheiden über die Erlangung (25) von Informationsverarbeitungsprogrammen, das imstande ist, das Herunterladen der Informationsverarbeitungsprogramme (13), die für die Dienste (11) erforderlich sind und nicht lokal zur Verfügung stehen, mindestens in Abhängigkeit von den zeitlichen Informationen zuzulassen oder zu untersagen, wobei die zeitlichen Informationen in den Informationen (12) enthalten sind, die den Diensten (11) zugeordnet sind;
- ein Modul zum Erlangen (26) von Informationsverarbeitungsprogrammen, das imstande ist, bei Auslösung durch das Modul (25) zum auf dem Auswahlprinzip beruhenden Entscheiden über die Erlangung, die für die Dienste (11) erforderlichen Informationsverarbeitungsprogramme (13) herunterzuladen.

2. Vorrichtung zum bedingten Entscheiden (20) über eine Ausführung nach Anspruch 1, **dadurch gekennzeichnet, dass** die vordefinierten Zeitpunkte Enden einer Freigabe der Ausführung der Dienste (11) angeben.

3. Vorrichtung zum bedingten Entscheiden (20) über eine Ausführung nach einem der Ansprüche 1 oder 2, **dadurch gekennzeichnet, dass** die vordefinierten Zeitpunkte Anfänge einer Freigabe der Ausführung der Dienste (11) angeben.

4. Vorrichtung zum bedingten Entscheiden (20) über eine Ausführung nach einem der vorhergehenden Ansprüche, **dadurch gekennzeichnet, dass** die den Diensten (11) zugeordneten Informationen mindestens einen Indikator für ein erzwungenes Herunterladen umfassen, der einen Wert "aktiviert" und einen Wert "deaktiviert" hat, wobei das Modul zum auf dem Auswahlprinzip beruhenden Entscheiden über die Erlangung (25) vorgesehen ist, um bei erteilter Freigabe das Herunterladen zu erzwingen, wenn der Indikator für ein erzwungenes Herunterladen den Wert "aktiviert" aufweist.

5. Vorrichtung zum bedingten Entscheiden (20) über eine Ausführung nach einem der vorhergehenden Ansprüche, **dadurch gekennzeichnet, dass**, wobei die Dienste (11) Meldungen (61, 81) zur Ankündigung der Dienste (11) und Inhalte (62) umfassen, das Empfangsmodul (21) vorgesehen ist, um die den Diensten (11) zugeordneten Informationen (12) in den Meldungen (61, 81) zur Ankündigung der Dienste (11) zu empfangen, und das Modul (22) zum Identifizieren von Angaben vorgesehen ist, um die Angaben aus den Dienste-Ankündigungsmeldungen (61, 81) zu gewinnen.

6. Bedingtes Entscheidungsverfahren zur Ausführung von Diensten (11) im Zusammenhang mit audiovisuellen Programmen, die in einem Rundsendemodus gesendet und über ein Kommunikationsnetz (6) empfangen werden, **dadurch gekennzeichnet, dass**, wobei die empfangenen Dienste (11) vorbestimmte Lebensdauern haben, die vorbestimmten Lebensdauern durch zeitliche Informationen bezüglich einer Freigabe der Ausführung der Dienste definiert sind, wobei die zeitlichen Informationen vordefinierte Zeitpunkte der Dienste umfassen, wobei die Dienste mit den gesendeten audiovisuellen Programmen synchronisiert sind, wobei das Verfahren Folgendes umfasst:
- einen Schritt zum Empfangen (41A) von Informationen (12), die den Diensten (11) vor Ausführungen der Dienste (11) zugeordnet wurden;
- einen Schritt zum Identifizieren (42A), unter den empfangenen Informationen (12), von Angaben, die sich auf Informationsverarbeitungsprogramme beziehen, die für die Ausführung der Dienste (11), denen die Informationen (12) zugeordnet sind, erforderlich sind;
- einen Schritt zum Prüfen (43A) der lokalen Verfügbarkeit der identifizierten Informationsverarbeitungsprogramme;
- einen Schritt zum auf dem Auswahlprinzip beruhenden Entscheiden über die Ausführung (72A) der Dienste, in dem eine Ausführung der Dienste (11) zugelassen wird, wenn die für die Dienste (11) erforderlichen Informationsverarbeitungsprogramme lokal verfügbar sind;
- einen Schritt zum auf dem Auswahlprinzip beruhenden Entscheiden über die Erlangung (45) von Informationsverarbeitungsprogrammen, in dem zwischen dem Zulassen und dem Untersagen des Herunterladens der Informationsverarbeitungsprogramme (13), die für die Dienste (11) erforderlich sind und nicht lokal zur Verfügung stehen, mindestens in Abhängigkeit von den zeitlichen Informationen entschieden wird, wobei die zeitlichen Informationen in den Informationen (12) enthalten sind, die den Diensten (11) zugeordnet sind;
- einen Schritt zum Erlangen (46A) von Informationsverarbeitungsprogrammen durch Herunterladen der Informationsverarbeitungsprogramme (13), die für die Dienste (11) erforderlich sind, bei Auslösung durch das Modul zum auf dem Auswahlprinzip beruhenden Entscheiden über die Erlangung (25).

7. Verfahren zum bedingten Entscheiden über eine Ausführung, **dadurch gekennzeichnet, dass** das Verfahren von einer Vorrichtung zum bedingten Entscheiden über eine Ausführung nach einem der Ansprüche 1 bis 5 durchgeführt wird.

## Claims

1. Conditional decision-making device (20) for execution of services (11) linked to broadcasted audiovisual programs and received via a communication network (6), **characterized in that** said received services (11) having predetermined lifetimes, said predetermined lifetimes being defined by temporal information relating to an execution validity of said services, said temporal information comprising predefined instants of said services, the services being synchronized with said broadcast audiovisual programs, said device (20) comprising:
- a module (21) for the reception of information (12) associated with said services (11), intended to receive said information (12) prior to the execution of said services (11);
- a module (22) for identification among said received information (12), of information relating to computer programs required for the execution of said services (11) associated with said information (12);
- a module (23) for verification of local availability of said identified computer programs;
- a selective decision-making module (24) for execution of services, intended to authorize the execution of said services (11) if said computer programs required for said services (11) are locally available;
- a module (26) for obtaining computer programs, able to download said computer programs (13) required for said services (11) upon initiation of the selective decision-making obtaining module (25);
- a decision-making module (26) for obtaining computer programs, able to authorize and to prevent downloading of said computer programs (13) required for said services (11) and not available locally, at least as a function of said temporal information, said temporal information being comprised in said information (12) associated to said services (11).

2. Conditional execution decision-making device (20) according to claim 1, **characterized in that** said predefined instants specify the ends of the execution validity of said services (11).

3. Conditional execution decision-making device (20) according to one of claims 1 or 2, **characterized in that** said predefined instants specify the starts of the execution validity of said services (11).

4. Conditional execution decision-making device (20) according to any one of the preceding claims, **characterized in that** said information (12) associated with said services (11) comprising at least one forced download indicator having an activated value and a deactivated value, said selective decision-making obtaining module (25) is intended to force authorization of said downloading if said forced download indicator has the activated value.

5. Conditional execution decision-making device (20) according to any one of the preceding claims, **characterized in that** said services (11) comprising announcements (61, 81) for services (11) and content (62), the reception module (21) is intended to receive said information (12) associated with said services (11), in said announcements (61, 81) for services (11) and the module (22) for identification of information is intended to extract said information in service announcement (61, 81) messages.

6. Method for conditional execution decision-making for services (11) relating to broadcasted audiovisual programs and received via a communication network (6), **characterized in that** said received services (11) having predetermined lifetimes, said predetermined lifetimes are defined by temporal information relating to an execution validity of said services, said temporal information comprising predefined instants of said services, the services being synchronized with said broadcasted audiovisual programs, said method comprising:
- a step (41 A) of reception of information (12) associated with said services (11) before execution of said services (11);
- a step (42A) of identification among said received information (12), of information relating to computer programs required for the execution of said services (11) associated with said information (12);
- a step (43A) of verification of local availability of said identified computer programs;
- a step (72A) of selective decision-making for execution of services, in which an execution of said services (11) is authorized if said computer programs required for said services (11) are locally available;
- a step (45) of selective decision-making for obtaining computer programs, in which a decision is made to either authorize or prevent the downloading of said computer programs (13) required for said services (11) and unavailable locally, at least according to said temporal information, said temporal information being comprised in said information (12) associated with said services (11);
- a step (46A) of obtaining computer programs, by downloading said computer programs (13) required for said services (11) upon initiation of the selective decision-making obtaining module (25).

7. Conditional execution decision-making method, **characterized in that** said method is implemented by a conditional execution decision-making device according to any one of claims 1 to 5.
